# EUROPÄISCHE PATENTSCHRIFT

(11) **EP 3 497 425 B1**
(45) Veröffentlichungstag und Bekanntmachung des Hinweises auf die Patenterteilung: **08.12.2021**
(21) Anmeldenummer: 17754143.0
(22) Anmeldetag: 11.08.2017
(51) Int. Cl.: G01M 13/02, G01M 13/025, G01M 13/027

(54) **VORRICHTUNG UND VERFAHREN ZUR ERPROBUNG EINES ANTRIEBSTRANGES EINES FAHRZEUGES**
DEVICE AND METHOD FOR TESTING A DRIVE OF A VEHICLE
DISPOSITIF ET PROCÉDÉ DE TEST D'UN ENTRAÎNEMENT D'UN VÉHICULE

(30) Priorität: 11.08.2016 DE 102016114866
(43) Veröffentlichungstag der Anmeldung: 19.06.2019
(73) Patentinhaber: Bertrandt Ingenieurbüro GmbH, 80939 München (DE)
(72) Erfinder: ZIMMER, Philipp, 82152 Krailing (DE)
(74) Vertreter: Patentanwaltskanzlei WILHELM & BECK
(86) Internationale Anmeldenummer: PCT/EP2017/070496
(87) Internationale Veröffentlichungsnummer: WO 2018/029358

(56) Entgegenhaltungen:
- EP-A1- 2 957 885

## Beschreibung

Die Erfindung betrifft eine Vorrichtung und Verfahren zur Erprobung wenigstens eines Teiles eines Antriebstranges eines Fahrzeuges gemäß den Ansprüchen.

Die Aufgabe der Vorrichtung und des Verfahrens besteht darin, dass der Antriebsstrang eines Fahrzeuges unter verbesserten und der Realität näheren Betriebsbedingungen getestet werden kann.

Die Vorrichtung und das Verfahren können zur Erprobung wenigstens eines Antriebstranges eines Fahrzeuges unter realistischen Betriebsbedingungen verwendet werden.

Die Erfindung ist insbesondere dazu vorgesehen, um eine Prüfstandserprobung von verschiedenen Funktionen eines Antriebstranges (allgemein drehende Teile) bei einer Antriebsbelastung insbesondere über die Räder zu ermöglichen. Beispielsweise ist die Erfindung dazu vorgesehen, um eine Prüfstandserprobung einer Parksperre einer Antriebseinheit, insbesondere in einem Getriebe mit einer Antriebsbelastung über die Räder zu ermöglichen.

Dabei wird in einer besonders bevorzugten Ausführungsform die Antriebsrotation durch die Vorrichtung am Reifenrad über eine gerade Kontaktfläche (möglichst genaue Simulation der Straße) eingebracht. Dies ermöglicht insbesondere eine realitätsnahe Darstellung der möglichen Schlupfarten zwischen Rad und Antriebseinheit der Vorrichtung.

In vorteilhafter Weise kann die Belastung mit fahrzeuggetreuen Aufbauten (Räder, Lager, Antriebswellen, Vorderachse, Hinterachse, Getriebe, Radaufhängung, usw.) überprüft werden.

Zudem kann die Belastung mit fahrzeuggetreuen Aufbauten mit gleichzeitiger Belastung wenigstens eines der Räder eines Antriebstranges oder wenigstens von zwei Rädern einer Achse des Fahrzeuges mit unterschiedlichen Reibkoeffizienten zwischen dem Rad und der Fahrbahn ein- oder beidseitig getestet werden. Dabei kann beispielsweise eine Fahrsituation, eine Anfahrsituation oder eine Abstellsituation bei einer nassen oder einer trockenen oder einer glatten oder einer eisigen Fahrbahn einseitig nur für ein Rad oder beidseitig für zwei Räder nachgestellt werden. Dabei können Teile eines Antriebstranges oder ein gesamter Antriebstrang eines Fahrzeuges in dem Prüfstand aufgebaut und überprüft werden.

Auch sind unterschiedlichen Raddrehzahlen zwischen zwei Räder, d.h. Radreifen insbesondere einer Achse eines Fahrzeuges möglich. Dadurch können z.B. eine Kurvenfahrt des Fahrzeuges, unterschiedlich große Schlupfe zwischen den zwei Rädern einer Achse und der Straße oder ein einseitiger Schlupf zwischen einem Rad und der Straße simuliert werden.

Bevorzugt ist eine Steuereinrichtung zur genauen Erstellung des Betriebszustandes des Antriebstranges, insbesondere der Antriebseinheit vorgesehen. Die Antriebseinheit kann ein Getriebe und/oder einen Antriebsmotor aufweisen und die Steuereinheit kann dazu vorgesehen sein, um das Getriebe und/oder den Antriebsmotor, insbesondere eine Parksperre anzusteuern. Zudem ist die Steuereinrichtung vorgesehen, um einen Antrieb der wenigstens einen Antriebstonne zu steuern. Zudem ist vorzugsweise eine Messeinrichtung zur Erfassung der Messwerte infolge der betriebsähnlichen Belastungsbedingungen vorgesehen. In einer Ausführung kann die rotatorische Energie zum Drehen der wenigstens einen Antriebstonne auch über die Antriebseinheit eingebracht werden. Dabei wird das Drehmoment von der Antriebseinheit über die Abtriebswelle, das Reifenrad und die Reibschlussplatte auf die Antriebstonne übertragen. Dabei kann der Antrieb der Antriebstonne z.B. als elektrische Bremse eingesetzt werden oder darauf verzichtet werden.

Die Erfindung bezieht sich auf eine Vorrichtung und ein Verfahren zur Erprobung von Antriebseinheiten, insbesondere von Getrieben und drehender Teile in und an einem Antriebstrang, insbesondere in einem Getriebe und in einem Antriebsmotor, sowie Antriebsmotorfunktionen und Getriebefunktionen wie z.B. Gangschaltungen, Bremsen, Sperren, Kupplungen, Wellen, Flansche, Verzahnungen, Lagerungen, Schmiermitteln, Kühleinrichtungen, Antriebe, Aktuatoren usw. unter Berücksichtigung von straßenähnlichen Belastungsbedingungen.

Auch sollen wenigstens Teile des Antriebstranges eines Fahrzeuges und gegebenenfalls der gesamte Antriebsstrang eines Fahrzeuges einer realitätsnahen Überprüfung unterworfen werden können. Bekannt sind die Schwierigkeiten zur realistischen Abbildung von Straßenbedingungen bei einer Prüfstandserprobung eines Antriebstrangs mit einem Getriebe.

Allgemein sind Prüfstandsaufbauten, insbesondere bei einer Komponentenerprobung, sehr starr ausgelegt, was zu einer Verfälschung der Messergebnisse bei der Erprobung führt.

Aus EP 2957885 A1 ist eine Mehrzweckdynamoanordnung bekannt, die einen Dynamometermotor, eine Fahrleistungsprüfwalze, die von einem Fahrzeugrad angetrieben werden kann, und eine Antriebsstrang-Dynamometerwelle umfasst, wobei das Fahrzeugrad von einem Fahrzeugantriebsstrang angetrieben werden kann. Es ist ein Getriebe zwischen dem Dynamometermotor und der Rollenprüfmaschine und der Antriebsstrang-Dynamometerwelle angeordnet. Das Fahrzeugrad ist direkt auf der Fahrleistungsprüfwalze angeordnet.

Diese Aufgabe wird mittels einer Prüfstandanordnung gemäß Anspruch 1 gelöst, bei der wenigstens einzelne Antriebskomponenten, insbesondere mehrere oder alle Antriebskomponenten im Antriebsstrang möglichst originalgetreu oder originalgetreu wie im Fahrzeug verbaut sind. Als Antriebskomponenten können Reifen, Felgen, Antriebswellen, Hinterachse, Vorderachse, Lager, Gelenke, Radaufhängung, Stoßdämpfer, Bremse, Antriebsmotor, Kupplung, Getriebe usw. angesehen werden. Mittels einer Antriebstonne werden eine Drehzahl und/oder ein Drehmoment direkt über das Reifenrad in den Antriebsstrang eingeleitet. Somit können Fahrtbelastungen und/oder Bremsbelastungen und/oder Schwingungsphänomene simuliert werden. Zudem können eine Drehzahl und/oder ein Drehmoment auch über die Antriebseinheit, die Abtriebswelle und das Reifenrad auf die Antriebstonne übertragen. Das Reifenrad, die Reibschlussplatte und die Antriebstonne sind ausgebildet, um Drehmoment auszutauschen. Die Reibschlussplatte ist zwischen der Antriebstonne und dem Reifenrad angeordnet. Die Drehachse der Antriebstonne ist auf gleicher Achse angeordnet wie die Drehachse des Reifenrades. Abhängig vom Drehmomentfluss kann das Reifenrad die Antriebstonne oder die Antriebstonne das Reifenrad antreiben bzw. mitschleppen.

Die Prüfstandanordnung zielt insbesondere darauf hin, das Getriebe, wenigstens eine Getriebefunktion, insbesondere alle Getriebefunktionen, und/oder Fahrregelsysteme des Antriebsmotors und/oder der Fahrzeugbremse unter realistischen Straßenbedingungen zu erproben. Die Antriebstrangbelastung und damit die Getriebebelastungen werden durch eine drehende Antriebstonne eingeleitet, die mittels Anpresskraft über Reibschluss auf das Reifenrad wirkt. Unter einer Antriebstonne wird z.B. ein Massenschwungrad verstanden, das drehbar gelagert ist. Zur wirklichkeitsnahen Übertragung der Kräfte ist zwischen der Antriebstonne und dem Reifenrad eine Reibschlussplatte angeordnet. Unter dem Reifenrad wird z.B. ein Rad eines Fahrzeuges mit einer Felge und einem Reifen verstanden. Die Reibschlussplatte ist ausgebildet, um das Reifenrad und insbesondere den Reifen in axialer und/oder in radialer Richtung zu belasten. Mittels der Abtriebswelle zwischen dem Reifenrad und dem Getriebe werden die Drehbewegung und das Drehmoment in das Getriebe eingeleitet.

Die Verbindung zwischen Antriebstonne und dem Reifenrad mittels Reibschlussplatte ermöglicht es, den Schlupf zwischen Reifenrad und Antriebstonne zu realisieren und dabei einen Straßenkontakt nachzubilden. Dabei können verschiedene Situationen wie z.B. ein stehendes Reifenrad (ohne Schlupf = Haftreibung) oder ein rutschendes Reifenrad (mit Schlupf = Gleitreibung) simuliert werden. Die Kontaktoberfläche der Reibschlussplatte, die einen Kontaktbereich bildet, ist vorzugsweise eben/plan. Zudem kann die Kontaktoberfläche der Reibschlussplatte vorzugsweise aus einem Straßenbaumaterial z.B. Asphalt realisiert sein. Weiterhin kann die Reibschlussplatte austauschbare Reibbeläge aufweisen, die die Kontaktoberfläche bilden. Somit können bei Bedarf, um unterschiedliche Straßenbeläge zu simulieren, die Reibbeläge ausgetauscht werden. Dabei können auch unterschiedliche Straßenverhältnisse auf zwei (rechts und links) Reifenrädern insbesondere einer Achse oder auch verschiedenen Achsen des Fahrzeuges simuliert werden.

Die Reibschlussplatte kann zusätzlich im Winkel längs zur Drehrichtung des Reifenrades verstellt werden um damit den Latsch zum Radsturz einzurichten. Der Belag des Reifenrades respektive die Reifenräder links und rechts können gleich aber auch unterschiedlich sein.

Insbesondere beim Schalten im Getriebe oder beim Abbremsen des Reifenrades oder beim Abbremsen des Getriebes oder beim Sperren des Getriebes mittels der Parksperre können so unterschiedliche Erprobungsbelastungen im Getriebe getestet werden.

Der Reifenabrollumfang links und rechts kann gleich sein, kann aber auch unterschiedlich groß ausgebildet sein. Dabei entstehen beim Schalten oder beim Abbremsen mittels der Parksperre unterschiedliche Erprobungsbelastungen im Getriebe.

Die Erprobung kann bei einem beidseitigen Aufbau folgendermaßen erfolgen: zwei Antriebstonnen werden mittels wenigstens eines Antriebs (z.B. Elektromaschine oder Hydraulischer Motor) insbesondere über eine Übersetzung auf eine Welle und einer optionalen weiteren Übersetzung auf die jeweilige Antriebstonne angetrieben. Durch die Anpresskraft der Reibschlussplatte auf das Reifenrad drehen sich die Abtriebswellen. Die Abtriebswellen stehen mit einem Drehmoment und/oder Drehzahl führenden Teil der Antriebseinheit in Verbindung. Die Abtriebswellen können z.B. eine Welle des Getriebes drehen. Das Getriebe kann ein Sperrad aufweisen, das sich mit der Welle des Getriebes mit dreht. Das Sperrrad ist Teil einer Parksperre des Getriebes. Hierbei ergibt sich im Lastfall ohne Schlupf zwischen Reifenrad und Reibschlussplatte der Antriebstonne eine Relativgeschwindigkeit zwischen Reifenrad und Antriebstonne zu null.

Durch das Aktivieren der Parksperre erfolgt je nach Konstruktion dieser Parksperre eine mehr oder weniger starke Bremswirkung auf die Abtriebswellen und den Abtriebstrang. Diese Bremswirkung kann im Extremfall schlagartig erfolgen. Final kommt der komplette Antriebsstrang inkl. Getriebe und Antriebsmotor zum Stillstand und bleibt am Weiterdrehen durch die Parksperre blockiert. Die gesamte rotatorische Systemenergie wird über die Parksperre und deren Anbindungspunkte aufgenommen. Hierbei auftretende Drehmomente und weitere Belastungen am Reifenrad, Abtriebswelle, Abtriebstrang, Antriebsmotor und Getriebe und speziell an der Parksperre werden vorzugsweise mittels Messtechnik erfasst und gespeichert. Anstelle des Getriebes kann auch der Antriebsmotor eine Parksperre aufweisen. Zudem kann die Abtriebswelle auch direkt mit dem Antriebsmotor verbunden sein.

Die Höchstkräfte sind durch den variabel gestaltbaren Reibschluss zwischen der Reibschlussplatte und dem Reifenrad begrenzt, d.h. bremst die Parksperre die Antriebseinheit, insbesondere das Getriebe oder den Antriebsmotor und damit das Reifenrad vehement ab, so rutscht das Reifenrad auf der Reibschlussplatte durch. Auch für diese Effekte können geeignete Messaufnehmer vorgesehen sein.

Bei höherer Drehgeschwindigkeit und/oder bei höheren Drehmomenten sowie in Abhängigkeit von der Reibschlussgestaltung kann ein Radschlupf auf einem Straßenbelag simuliert werden.

Ebenfalls können Versuche beim Einlegen der Parksperre bei hohen Drehzahlen der Abtriebswelle erprobt und die entstehenden Belastungen erfasst und/oder eventuelle Schäden beobachtet werden.

Ebenfalls können Versuche bei eingelegter Parksperre und bei minimaler bis keiner Drehzahl, jedoch hohen Drehmomenten erprobt und entsprechende Belastungen erfasst bzw. eventuelle Schäden beobachtet werden.

Ebenfalls können Versuche durchgeführt werden, bei denen bei hohen Drehzahlen die Fahrzeugbremse aktiviert wird und entsprechende Belastungen des Antriebstranges erfasst und eventuelle Schäden beobachtet werden.

Ebenfalls können Versuche bei aktivierter Fahrzeugbremse mit minimaler bis keiner Drehzahl, jedoch hohen Drehmomenten erprobt und entsprechende Belastungen des Antriebstranges erfasst und eventuelle Schäden beobachtet werden.

Ebenfalls können Versuche zu Drehzahl/Drehmoment-Verteilern in Getrieben erprobt und entsprechende Belastungen des Antriebstranges erfasst und eventuelle Schäden beobachtet werden.

Die Vorrichtung zur Erprobung wenigstens eines Teils eines Antriebstranges eines Fahrzeuges weist wenigstens eine rotierbare Antriebstonne auf, die drehbar gelagert ist. Die Antriebstonne kann über einen Antrieb angetrieben werden. Die Antriebstonne weist eine Reibschlussplatte auf, wobei die Reibschlussplatte an einem drehbar gelagerten Reifenrad anliegt, wobei das Reifenrad mit einer Abtriebswelle verbunden ist. Die Abtriebswelle ist an ein Getriebe, insbesondere an eine Ausgangswelle des Getriebes angeschlossen. Die Antriebstonne mit der Reibschlussplatte ist ausgebildet ist, um das Reifenrad anzutreiben, insbesondere mitzuschleppen. Dabei dreht sich die Antriebstonne um eine vorgegebene Drehachse. Zudem dreht sich die Reibschlussplatte ebenfalls um die Drehachse der Antriebstonne. Die Drehachse der Antriebstonne ist im Wesentlichen parallel und insbesondere auf gleicher Achse angeordnet wie die Drehachse des Reifenrades. Auf diese Weise kann ein mechanisch einfacher Aufbau des Prüfstandes bei geringen Abmessungen erreicht werden, der zudem eine realitätsnahe Prüfung wenigstens eines Teils des Antriebstranges, insbesondere wenigstens einer Antriebsachse des Antriebstranges ermöglicht.

In einer Ausführung ist die Reibschlussplatte in einem Kontaktbereich, der zur Anlage an das Reifenrad vorgesehen ist, eben ausgeführt. Dadurch kann eine realitätsnahe Abbildung einer Auflage des Reifenrades auf einer Straße nachgebildet werden.

In einer Ausführung ist der Kontaktbereich der Reibschlussplatte in einer Reifenaufstandsfläche, in der das Reifenrad an dem Kontaktbereich aufliegt, eben ausgebildet ist. Dadurch kann eine einfachere Reibschlussplatte verwendet werden.

In einer Ausführung ist die Reibschlussplatte in der Position relativ zum Reifen verstellbar ausgeführt. Dadurch können verschiedene relative Positionen zwischen dem Reifenrad und der Reibschlussplatte eingestellt und getestet werden.

In einer Ausbildung ist die Reibschlussplatte in einem Winkel geneigt zu einer parallelen Anordnung zu der Drehachse des Reifenrades zur Nachbildung eines Radsturzes verstellbar ausgebildet. Damit können verschiedene Stürze des Reifenrades gegenüber der Straße auf einfache Weise nachgebildet werden.

In einer Ausbildung ist die Reibschlussplatte in einem Abstand zu einer Drehachse des Reifenrades verstellbar ausgebildet ist. Somit kann eine Anpresskraft der Reibschlussplatte, d.h. eine Radaufstandskraft des Reifenrades auf der Reibschlussplatte eingestellt werden. Auf diese Weise können verschieden schwere Fahrzeuge oder wenigstens Achslasten oder Radlasten mit einfachen Mitteln nachgebildet werden.

In einer Ausführung weist die Reibschlussplatte austauschbare Reibbeläge auf. Dadurch können gewünschte Oberflächen der Straße mit einfachen Mitteln schnell und einfach nachgebildet werden.

In einer weiteren Ausführung sind die Reibbeläge mit unterschiedlichen Oberflächenrauigkeiten insbesondere im Kontaktbereich ausgebildet. Dadurch können unterschiedliche Reibwerte zwischen dem Reifenrad und der Reibschlussplatte eingestellt werden. Dadurch kann eine nasse, trockene, vereiste, glatte und/oder raue Straße schnell und einfach nachgebildet werden.

In einer Ausbildung steht das Getriebe mit einem Antriebsmotor in Wirkverbindung, wobei das Getriebe und der Antriebsmotor die Antriebseinheit bilden. Damit kann auch das Zusammenwirken des Getriebes mit dem Antriebsmotor geprüft und getestet werden.

In einer Ausführung ist an die Abtriebswelle eine Fahrzeugbremse angeschlossen, um eine Drehbewegung des Reifenrades zu bremsen. Somit kann auch die Funktion und Auswirkung der Fahrzeugbremse auf die Anordnung überprüft werden.

In einer Ausführung weist die Antriebstonne Befestigungsmittel auf, wobei mithilfe der Befestigungsmittel verschiedene primäre Massenelemente an der Antriebstonne befestigt werden können. Dadurch können mit einfachen Mitteln unterschiedlich schwere Fahrzeuge für den Bewegungsimpuls des Fahrzeuges nachgebildet werden.

In einer Ausführung ist eine zweite rotierbare Antriebstonne vorgesehen, wobei die zweite Antriebstonne über einen Antrieb angetrieben werden kann, wobei die zweite Antriebstonne eine zweite Reibschlussplatte aufweist, wobei die zweite Reibschlussplatte an einem drehbar gelagerten zweiten Reifenrad anliegt, wobei das zweite Reifenrad mit einer zweiten Abtriebswelle verbunden ist, wobei die zweite Abtriebswelle an das Getriebe angeschlossen ist, wobei die zweite Antriebstonne mit der zweiten Reibschlussplatte ausgebildet ist, um das zweite Reifenrad anzutreiben bzw. zu schleppen. Dadurch kann eine gesamte Achse, insbesondere eine Antriebsachse eines Fahrzeuges nachgebildet und getestet werden.

Abhängig von der gewählten Ausführung können auch vier Antriebstonnen vorgesehen sein, die jeweils mit einem Reifenrad in Wirkverbindung stehen. Somit kann ein Antriebstrang eines Fahrzeuges mit zwei Achsen, insbesondere mit zwei Antriebsachsen überprüft und getestet werden. Dadurch können verschiedenste Antriebstrangkonfigurationen wie z.B. Allradantrieb, Hybridantrieb, Elektroantrieb hinten und Verbrennungsmotor vorne usw. getestet werden.

In einer Ausführung sind die erste und die zweite Abtriebswelle über ein Ausgleichsdifferential mit einem ein Drehmoment und/oder eine Drehzahl führenden Bauteil der Antriebseinheit, insbesondere mit einem ein Drehmoment und/oder eine Drehzahl führenden Bauteil des Getriebes oder mit einem ein Drehmoment und/oder eine Drehzahl führenden Bauteil des Antriebsmotors verbunden. Somit kann auch diese Anordnung getestet werden.

In einer Ausführung ist eine Steuereinheit vorgesehen, wobei die Steuereinheit mit der Antriebseinheit, insbesondere mit dem Getriebe und/oder mit dem Antriebsmotor verbunden ist, wobei die Steuereinheit ausgebildet ist, um eine Funktion der Antriebseinheit, insbesondere des Getriebes und/oder des Antriebsmotors zu steuern, insbesondere zu verändern.

Es wird ein Verfahren zur Erprobung wenigstens eines Teiles eines Antriebstranges eines Fahrzeuges gemäß Anspruch 12 vorgeschlagen, wobei eine rotierbare Antriebstonne vorgesehen ist, wobei eine Reibschlussplatte der Antriebstonne an einem drehbar gelagerten Reifenrad anliegt, wobei das Reifenrad über eine Abtriebswelle mit einer Antriebseinheit, insbesondere mit einem Getriebe und/oder mit einem Antriebsmotor verbunden ist, wobei durch Drehen der Antriebstonne die Reibschlussplatte gedreht wird. Durch die Reibschlussplatte wird das Reifenrad mitgedreht. Zudem kann durch Drehen des Reifenrades mithilfe der Antriebseinheit über die Reibschlussplatte die Antriebstonne gedreht werden. Das Reifenrad dreht die Abtriebswelle und bewegt ein Teil der Antriebseinheit, insbesondere ein Drehmoment und/oder Drehzahl führendes Bauteil des Getriebes und/oder des Antriebsmotors. In analoger Weise kann auch durch die Antriebseinheit die Antriebstonne gedreht werden. Während des Drehens des Reifenrades wird eine Funktion des Antriebstranges, insbesondere der Antriebseinheit gesteuert, insbesondere verändert. Dadurch kann ein Verhalten des Antriebstranges mit einem einfachen Verfahren überprüft werden.

In einer Ausführung wird als Funktion des Antriebstranges eine Parksperre der Antriebseinheit, insbesondere des Getriebes gelöst oder aktiviert. Somit kann der Einfluss der Parksperre mit einem einfachen Verfahren getestet werden.

In einer Ausführung ist wenigstens eine Messeinrichtung vorgesehen, wobei mithilfe der Messeinrichtung wenigstens ein Parameter des Antriebstranges, insbesondere des Reifenrades und/oder der Abtriebswelle und/oder des Getriebes aufgenommen wird.

In einer Ausführung wird mithilfe der drehbaren Antriebstonne mit der Reibschlussplatte eine Maximalbelastung auf das Reifenrad und die damit verbundenen Teile des Antriebstranges für einen realen Fahrzeugstraßenbetrieb, insbesondere für einen maximalen Belastungsfall wie z.B. bei einem Rutschen eines blockierenden Reifens auf einem Straßenbelag simuliert. Dadurch kann eine Maximalbelastung des Antriebstranges getestet werden.

### Anwendungsgebiet

Die Vorrichtung eignet sich bei der Erprobung von Getriebe und Achsgetrieben, sowie Funktionserprobungen einzelner Getriebekomponenten und Abtriebstrangkomponenten wie z.B. Parksperren, Radsätze, Kupplungen, Wellen, Lagerungen, Bremsen, Drehzahl-Drehmomentverteilern, Fahrregelsystemen. Zudem können verschiedene Funktionen des Antriebstranges wie z.B. Schaltverhalten des Getriebes, Steuerverfahren des Antriebsmotors, Bremsverhalten der Fahrzeugbremse usw. überprüft werden. Des Weiteren eignet sich die Vorrichtung bei der Applikation und Erprobung der Funktionen eines gesamten Antriebsstranges.

In einem bevorzugten Versuchsaufbau wird während einer durch die Antriebstonne übertragenen Rotation auf die Reifenräder die Parksperre im Getriebe aktiviert und getestet, ob diese einrastet oder verriegelt. Durch das abrupte Stehenbleiben des Getriebes ist ein Massenträgheitsmoment zu kompensieren, das durch die Trägheit der Massenelemente und die anderen Massen des Versuchsaufbaues verursacht werden. Das abzubauende Massenträgheitsmoment wird im Wesentlichen an der Parksperre aber auch an den zwischen der Antriebstonne und der Parksperre angeordneten Maschinenelementen insbesondere Antriebstrangelementen wirken. Damit kann auch der gesamte Antriebsstrang effektiv für verschiedene Lastfälle geprüft werden.

In einem alternativen Versuchsaufbau kann ein Lagerbock, aber bevorzugt die Reibschlussplatte der Antriebstonne aus einer zur Drehachse des Reifenrades parallelen Ausrichtung in einen vorgegebenen Winkel zur Drehachse des Reifenrades gestellt werden.

Die Rotationsrichtung der Antriebstonne ist vorzugsweise in beide Drehrichtungen vorgesehen. In besonderen Anwendungsfällen kann eine schwingende Belastung durch eine variierende Drehgeschwindigkeit und/oder durch eine Änderung der Drehrichtung der Antriebstonnen in das Reifenrad und die daran angeschlossenen Teile des Antriebstranges eingeleitet werden.

Die Vorrichtung kann eigenständig vom Verfahren betrieben werden, ist aber besonders bevorzugt zur Durchführung des Verfahrens geeignet.

Weitere vorteilhafte und zweckmäßige Ausgestaltungen der Erfindung sind nachstehend anhand der Zeichnung näher beschrieben und in den Unteransprüchen angegeben.

Es zeigen:
- Figur 1: einen schematischen Aufbau der Vorrichtung zur Prüfung eines Antriebstranges eines Fahrzeuges zumindest mit einer Antriebseinheit, einer Abtriebswelle, zwei Reifenrädern, zwei Antriebstonnen mit Reibschlussplatten und einem zugehörigen Antrieb der Antriebstonnen,
- Figur 2: eine schematische Seitenansicht auf eine Antriebstonne und das zugeordnete Reifenrad mit der die Antriebskraft übertragende Reibschlussplatte, eine Teilansicht aus Figur 1 mit einer
- Figur 3: Darstellung einer in einem Winkel geneigt angeordneten Reibschlussplatte und dem zugeordneten Reifenrad,
- Figur 4: einen schematischen Teilausschnitt einer Ausführung der Vorrichtung gemäß Fig. 1, wobei das Reifenrad an der Antriebstonne drehbar gelagert ist, und
- Fig. 5: eine schematische Darstellung einer Reibschlussplatte mit einem auswechselbaren Reibbelag.

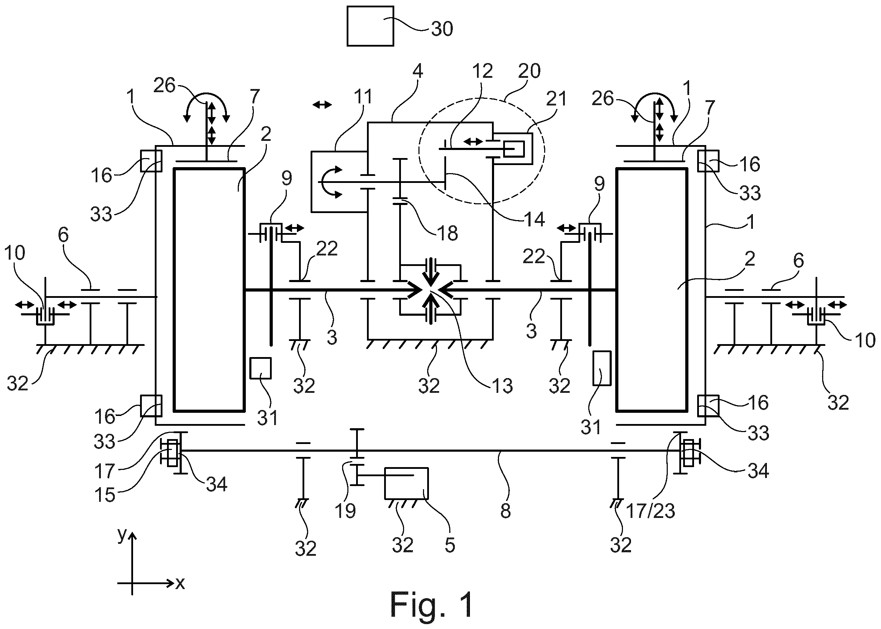

Figur 1 zeigt in einer schematischen Darstellung eine Vorrichtung zur Erprobung wenigstens eines Teils eines Antriebstranges eines Fahrzeuges, d.h. einen Prüfstand. Ein Antrieb 5 des Prüfstandes überträgt ein Drehmoment über eine Übersetzung 19 auf eine Welle 8. Die Welle 8 treibt über jeweils eine weitere Übersetzung 17,23 an gegenüber liegenden Enden jeweils eine Antriebstonne 1 an. Jede Antriebstonne 1

überträgt die Kräfte über eine Reibschlussplatte 7 auf jeweils ein Reifenrad 2 des Abtriebstranges einer Abtriebswelle 3. In einer weiteren Ausführung können die Antriebstonnen 1 auch durch die Antriebseinheit über die Abtriebswelle 3, das Reifenrad 2 und die Reibschlussplatte 7 angetrieben werden. Die Antriebswelle 3 ist vorzugsweise einem originalen Aufbau einer Antriebswelle eines Antriebstranges eines Fahrzeuges nachgebildet. Insbesondere kann der Antriebstrang einem Fahrzeugantrieb, d.h. einem Antriebstrang eines Prototypes oder eines Serienfahrzeuges nachgebildet sein.

Der Antriebstrang umfasst üblicherweise das Reifenrad 2, eine Lagerung 22, eine Abtriebswelle 3, und eine Antriebseinheit, die ein Getriebe 4 und/oder einen Antriebsmotor 11 umfassen kann. Wie in der Figur 1 dargestellt, kann der Antriebstrang auch beidseitig von der Antriebseinheit, d.h. vom Getriebe 4 und/oder vom Antriebsmotor 11 ausgebildet sein und somit einen vollständigen Antriebstrang als Versuchsaufbau nachbilden.

Für eine einfache Versuchsanordnung reicht die Anordnung nur einer Antriebstonne 1, einer Reibschlussplatte 7, eines Reifenrades 2, einer Abtriebswelle 3 und einem Getriebe 4. Zudem kann auch ein Antriebsmotor 11 des Fahrzeuges mit dem Getriebe 4 verbunden sein. Die Verbindung zwischen dem Antriebsmotor 11 und dem Getriebe 3 kann formschlüssig, reibschlüssig und beispielsweise über eine Kupplung und/oder einen Wandler ausgebildet sein. Der Antriebsmotor 11 kann als Verbrennungsmotor und/oder als Elektromotor und/oder als hydraulischer Antrieb und/ oder als Druckluftantrieb ausgebildet sein.

Das Getriebe 4 weist in der Regel, insbesondere bei einem beidseitigen Aufbau, ein Ausgleichsdifferential 13 auf, welches über eine Welle des Getriebes und insbesondere über eine Übersetzung 18 mit dem Antriebsmotor 11 eines Fahrzeuges verbunden sein kann. Je nach Versuchsaufbau, kann damit beispielsweise eine Funktion einer Parksperre 20 getestet werden, welche bevorzugt über eine formschlüssige Verbindung das Getriebe an einer Drehbewegung hindert. Die Parksperre 20 dient dazu, um ein Fahrzeug im realen Betrieb an einer unbeabsichtigten Fortbewegung im Parkzustand zu hindern. Die Parksperre 20 besteht in diesem Ausführungsbeispiel aus eine axial verschiebbaren Dorn 12, welcher über einen Magnet-Ausrückschalter 21 in einen Sperr- und einen Freigabezustand verschiebbar ist. Im Sperrzustand befindet sich der Dorn 12 im Eingriff mit einem Sperrrad 14, welches das Getriebe 4 und somit den mit dem Getriebe 4 verbundenen Abtriebstrang und Antriebstrang sperrt.

Zur realistischen Ausbildung des Prüfstandes kann weiterhin eine Bremse 9 benachbart zum Reifenrad 2 angeordnet sein. Insbesondere wird die Bremse 9 an der Abtriebswelle 3 angreifen, um das Reifenrad 2 abzubremsen. Die Bremse 9 kann gemäß einer Fahrzeugbremse eines Serienfahrzeuges ausgebildet sein.

Die Antriebstonnen 1 sind mit ihren Drehachsen am Prüfstand über jeweils einen Lagerbock 6 gelagert und können ebenfalls bei Bedarf mittels jeweils einer Prüfstandbremse 10 gebremst oder blockiert werden. Die Lagerböcke sind mit einer Prüfstandplatte 32 verbunden. Das Getriebe 4 ist ebenfalls fest mit der Prüfstandplatte 32 verbunden. Die Parksperre 20 ist direkt oder indirekt mit der Prüfstandplatte 32 verbunden. Der Antriebsmotor 11 ist zudem mit der Prüfstandplatte 32 fest verbunden. Die Prüfstandbremsen 10 und die Bremse 9 sind ebenfalls fest mit der Prüfstandplatte 32 verbunden. Die Prüfstandplatte 32 kann auch in Form eines Bodens ausgebildet sein.

Jede Antriebstonne 1 zeichnet sich insbesondere durch die folgenden kumulativen oder alternativen Merkmale aus: An der Antriebstonne 1 sind austauschbare primäre Massenelemente 16 angeordnet. Dazu weist die Antriebstonne 1 Befestigungsmittel 33 zum lösbaren Befestigen der primären Massenelemente 16 auf. Die Befestigungsmittel 33 können in Form von Schraubbolzen ausgebildet sein, wobei die primären Masseelemente 16 Löcher aufweisen, durch die die Bolzen geführt sind. Die primären Masseelemente 16 werden durch Schrauben an den Schraubbolzen gesichert. Dadurch können relativ einfach und schnell verschieden schwere Masseelemente an der Antriebstonne 1 befestigt werden.
- Die primären Massenelemente 16 können während der Rotation der Antriebstonne 1 die kinetische Energie eines ausrollenden Fahrzeuges simulieren und werden je nach Versuchsanordnung respektive Versuchsaufbau an den notwendigen Lastfall in ihrer Masse angepasst.
Darüber hinaus kann über die primären Massenelemente 16 eine Unwucht der Antriebstonne, die auch als Antriebstrommel bezeichnet wird, eliminiert werden.

In einer Ausführung können an der Welle 8, angetrieben durch den Antrieb 5, austauschbare sekundäre Massenelemente 15 angeordnet werden. Diese Massenelemente 15 können während der Rotation der Antriebstonne 1 die kinetische Energie eines ausrollenden Fahrzeuges simulieren und werden je nach Versuchsanordnung respektive Versuchsaufbau an den notwendigen Lastfall in ihrer Masse angepasst. Dazu können zweite Befestigungsmittel 34 vorgesehen sein, die ein schnelles und einfaches Wechseln der sekundären Massen 15 ermöglichen. Die zweiten Befestigungsmittel 34 können z.B. als Schraubbolzen ausgebildet sein, die durch entsprechende Löcher der sekundären Massen 15 geführt sind. Zudem sind Schrauben vorgesehen, die auf die Enden der Schraubbolzen geschraubt sind und die sekundären Massen an der Welle 8 festhalten.

Durch die vorteilhafte Verwendung von sekundären Massenelementen 15 an der Welle 8 bewirken diese bei einer entsprechenden Übersetzung 17, 23 eine entsprechende höhere Trägheit an der Antriebstonne 1.

Durch eine austauschbare Übersetzung 17, 23 und austauschbare Massenelemente 15 und 16 besteht eine hohe Variabilität in den möglichen Prüfstandsaufbauten und den nachzustellenden Lastfällen. Gleichzeitig ergibt sich in vorteilhafter Weise eine zügige Lastfallanpassung zwischen verschiedenen Versuchsaufbauten.

Um beispielsweise Kurvenfahrten im Versuchsaufbau abzubilden, kann die rechte Übersetzung 17 mit einer Übersetzung 23 ersetzt werden, die eine andere Übersetzung als die linke Übersetzung 17 aufweist. Somit könnte man in diesem Versuchsaufbau in einfacher Art und Weise Übersetzungen oder Verzahnungen, wie beispielsweise das Ausgleichsdifferential 13 unter realen und schwierigen Bedingungen testen. Insbesondere kann dabei eine Differentialsperre und/oder Drehmoment/Drehzahlverteiler auf Funktion und Verschleiß abgetestet werden.

Zudem ist eine Steuereinheit 30 vorgesehen, die zur Steuerung des Antriebes 5 und zur Steuerung der Funktionen des Antriebstranges, insbesondere der Steuerung der Funktionen des Getriebes 4 und/oder der Steuerung der Funktionen des Antriebsmotors 11 und/oder der Steuerung der Bremse 9 und der Prüfstandbremse 10 vorgesehen ist. Dazu ist die Steuereinheit 30 entsprechend mit den Komponenten des Antriebstranges, insbesondere mit dem Getriebe 4 und/oder mit dem Antriebsmotor 11 und/oder mit der Bremse 9 und/oder mit der Prüfstandbremse 10 verbunden.

Die Steuereinheit 30 ist zudem mit entsprechenden Messeinrichtungen 31 verbunden, die Parameter des Antriebstranges, insbesondere Drehzahlen, Drehmomente, Beschleunigungen, Temperaturen, akustische Geräusche und/oder mechanische Spannungen usw. der Komponenten des Antriebstranges erfassen. Weiterhin kann die Messeinrichtung auch als Kamera ausgebildet sein, die Bilder der Vorrichtung und des Antriebstranges erfasst. Die mit den Messeinrichtungen 31 aufgenommenen Werte können in einem Datenspeicher der Steuereinheit 30 abgelegt werden. Zudem können im Datenspeicher Testverfahren und Testprogramme zur Prüfung des Antriebstranges abgelegt sein. Die Steuereinheit kann über eine Anzeige verfügen, auf der verschiedene Parameter der Vorrichtung angezeigt werden.

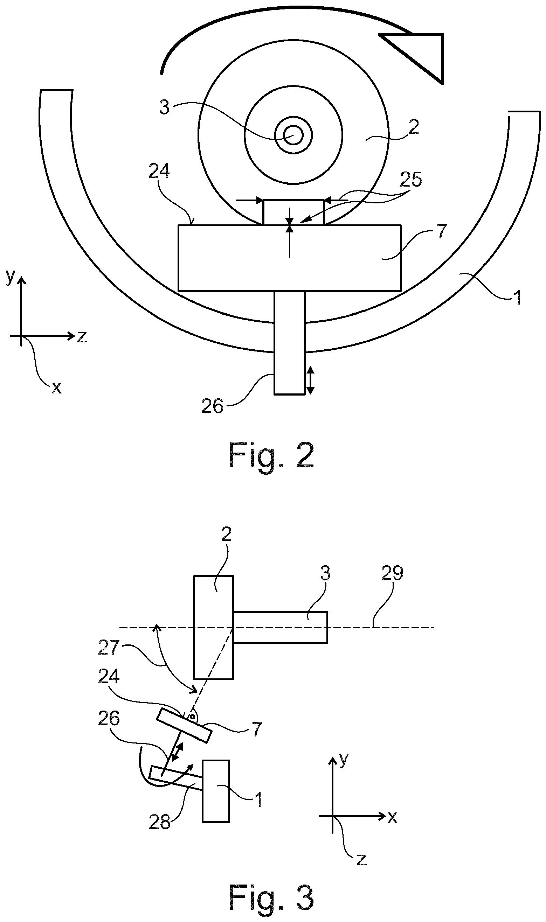

Fig. 2 zeigt einen Teil einer schematischen Seitenansicht einer Antriebstonne 1 und des zugeordneten Reifenrades 2. An jeder Antriebstonne 1 ist eine Reibschlussplatte 7 angeordnet, welche entweder einstückig mit der Antriebstonne 1 ausgebildet ist oder austauschbar mit der Antriebstonne 1 verbunden ist.

In einer bevorzugten Ausführungsform ist die Reibschlussplatte 7 in einem Kontaktbereich 24, der für die Auflage des Reifenrades 2 vorgesehen ist, eben ausgebildet. Hiermit soll eine Reifenaufstandsfläche 25 des Radreifens auf dem Kontaktbereich, der in der Regel eine Sehne am Außenumfang des Radreifens 2 darstellt, möglichst realistisch nachgebildet werden.

An der Antriebstonne 1 ist die Reibschlussplatte 7 je nach Bedarf verstellbar in der Position angeordnet. Bevorzugt ist eine axiale Verstellung der Reibschlussplatte 7 in einer Y-Richtung senkrecht zur Drehachse des Radreifens 2 vorgesehen, um die Reibschlussplatte 7 mit einem unterschiedlichen Abstand entlang der Y-Achse in Bezug auf die Mitte des Radreifens 2 positionieren zu können. Dadurch können unterschiedliche Lastfälle, z.B. den Lastfall eines schweren Fahrzeuges oder den Lastfall eines leichten Fahrzeuges durch unterschiedliche den Anpressdrücke zwischen der Reibschlussplatte 7 und dem Radreifen 2 darzustellen. Zur verstellbaren Montage der Reibschlussplatte 7 kann ein Haltedorn 26 vorgesehen sein, wobei an einem Ende des Haltedorns 26 die Reibschlussplatte 7 befestigt ist. Der Haltedorn 26 kann relativ entlang der Y-Achse gegenüber der Antriebstonne 1 verschoben und fixiert werden. Dazu können entsprechende Schraubgewinde oder Aktoren vorgesehen sein, mit denen die Position des Haltedorns 26 verändert werden kann.

Figur 3 zeigt einen Teilausschnitt einer schematischen Darstellung einer Antriebstonne 1, einer Reibschlussplatte 7 und des zugeordneten Reifenrades der Vorrichtung der Figur 1. In besonderen Anwendungsfällen, wie in Figur 3 dargestellt, ist auch eine winkelige Verstellung der Reibschlussplatte 7 axial zur Abtriebswelle vorgesehen, um beispielsweise den Radsturz an vorgegebene Lastfälle anzupassen. Dabei kann die Reibschlussplatte 7 seitlich aus der Y-Z-Ebene um einstellbare Winkel 27 heraus geschwenkt angeordnet werden. Dadurch ist der Kontaktbereich 24 nicht mehr parallel zur Drehachse 29 des Radreifens 2 angeordnet, sondern um den Winkel 27 geneigt dazu angeordnet. Diese Verstellung kann im vorliegenden Ausführungsbeispiel durch zumindest einen Haltedorn 26 an der Reibschlussplatte 7 umgesetzt werden, der formschlüssig und über eine einstellbare Halterung 28 mit der Antriebstonne 1 wirkverbunden ist. Beispielsweise kann die Reibschlussplatte 7 um einen Teilkreis um einen Mittelpunkt des Radreifens 2 in der Y-X-Ebene verschwenkt werden.

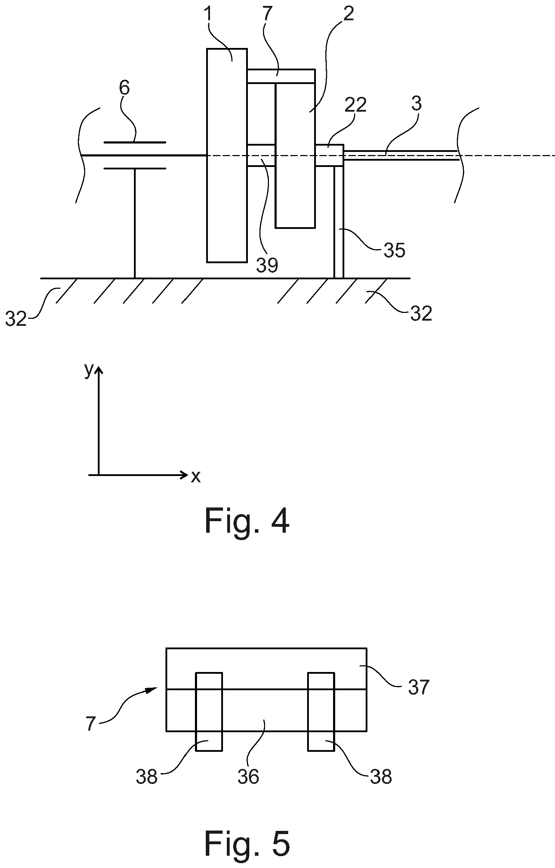

Fig. 4 zeigt einen schematischen Teilausschnitt einer Ausführung der Vorrichtung der Figur 1. Dabei ist das Reifenrad 2 über ein Lager 39, insbesondere Pilotlager an der Antriebstonne 1 drehbar gelagert. Zudem ist das Reifenrad 2 über die Lagerung 22, die an einem zweiten Lagerbock 35 angeordnet ist, zusätzlich gelagert. Die Lagerung 22 kann auch eine Lagerung der Abtriebswelle 3 darstellen. In dieser Weise können beide Reifenräder 2 der Vorrichtung gelagert sein. Durch die Lagerung 39 des Reifenrades 2 an der Antriebstonne 1 wird eine stabile und einfache Lagerung erreicht. Zudem wird eine koaxiale Ausrichtung der Drehachsen des Reifenrades 2 und der Antriebstonne 1 unterstützt. Dadurch kann eine bessere Zentrierung der Achsen des Reifenrades 2 und der Antriebstonne 1 erreicht werden.

Fig. 5 zeigt eine schematische Darstellung einer Reibschlussplatte 7, die in dieser Ausführung eine Trägerplatte 36 und einen Reibbelag 37 aufweist. Der Reibbelag 37 ist über lösbares Befestigungsmittel 38 mit der Trägerplatte 36 verbunden. Die Befestigungsmittel 38 können z.B. in Form von Schraubverbindungen oder in Form von Klammern ausgebildet sein. Zur Darstellung von verschiedenen Straßenoberflächen und/oder Straßenzuständen können verschiedene Reibbeläge 37 vorgesehen sein, die unterschiedlich raue Oberflächen aufweisen. Zudem können die Reibbeläge auch vereist sein. Weiterhin können die Reibbeläge aus Straßenoberflächen wie z.B. Asphalt, Beton, Kopfsteinpflaster usw. gebildet sein.

### Bezugszeichenliste:

- 1: Antriebstonne
- 2: Reifenrad
- 3: Abtriebswelle
- 4: Getriebe
- 5: Antrieb
- 6: Lagerbock
- 7: Reibschlussplatte
- 8: Welle
- 9: Fahrzeugbremse
- 10: Prüfstandbremse
- 11: Antriebsmotor
- 12: Dorn
- 13: Ausgleichsdifferential
- 14: Sperrrad
- 15: Massenelemente sekundär
- 16: Massenelemente primär
- 17: Übersetzung
- 18: Übersetzung
- 19: Übersetzung
- 20: Parksperre
- 21: Magnet-Ausrückschalter
- 22: Lagerung
- 23: Übersetzung
- 24: Kontaktbereich
- 25: Reifenaufstandsfläche
- 26: Haltedorn
- 27: Winkel
- 28: Halterung
- 29: Drehachse Reifenrad
- 30: Steuereinheit
- 31: Messeinrichtung
- 32: Prüfstandplatte
33 1. Befestigungsmittel
34 2. Befestigungsmittel
35 2. Lagerbock
36 Trägerplatte
37 Reibbelag
38 Befestigungsmittel
39 Weiteres Lager

## Patentansprüche

1. Vorrichtung zur Erprobung wenigstens eines Teils eines Antriebstranges eines Fahrzeuges, mit wenigstens einer rotierbaren Antriebstonne (1), die über einen Antrieb (5) angetrieben werden kann, wobei die Antriebstonne (1) eine Reibschlussplatte (7) aufweist, wobei die Reibschlussplatte (7) an einem drehbar gelagerten Reifenrad (2) anliegt, wobei das Reifenrad (2) mit einer Abtriebswelle (3) verbunden ist, wobei die Abtriebswelle (3) an eine drehfest gelagerte Antriebseinheit (4, 11) angeschlossen ist, wobei die Antriebstonne (1) mit der Reibschlussplatte (7) ausgebildet ist, um Drehmoment mit dem Reifenrad (2) auszutauschen, **dadurch gekennzeichnet, dass** die Reibschlussplatte (7) zwischen der Antriebstonne (1) und dem Reifenrad (2) angeordnet ist, und dass die Drehachse der Antriebstonne (2) auf gleicher Achse angeordnet ist wie die Drehachse des Reifenrades (2).

2. Vorrichtung nach Anspruch 1, wobei die Antriebseinheit ein Getriebe (4) und/oder einen Antriebsmotor (11) aufweist.

3. Vorrichtung nach Anspruch 1 oder 2, **dadurch gek ennzeichnet**, dass die Reibschlussplatte (7) in einem Kontaktbereich (24), der zur Anlage an das Reifenrad (2) vorgesehen ist, eben ausgeführt ist.

4. Vorrichtung nach einem der Ansprüche 1 bis 3, **dadurc h gekennzeichnet**, dass die Reibschlussplatte (7) in der Position verstellbar gegenüber dem Reifenrad (2) an der Antriebstonne (1) gelagert ist.

5. Vorrichtung nach Anspruch 4, wobei die Reibschlussplatte (7) in einem Winkel geneigt zu einer parallelen Anordnung zu einer Drehachse des Reifenrades zur Nachbildung eines Radsturzes verstellbar ausgebildet ist, und/oder wobei die Reibschlussplatte (7) in einem Abstand zu einer Drehachse des Reifenrades (2) verstellbar ausgebildet ist, um eine Anpresskraft an das Reifenrad (2) zu verändern.

6. Vorrichtung nach einem der vorhergehenden Ansprüche, wobei die Reibschlussplatte (7) einen austauschbaren Reibbelag (37) aufweist, und wobei insbesondere Reibbeläge (37) mit unterschiedlichen Oberflächenrauigkeiten vorgesehen sind, um unterschiedliche Reibwerte zwischen dem Reifenrad (2) und der Reibschlussplatte (7) einstellen zu können.

7. Vorrichtung nach einem der vorhergehenden Ansprüche, wobei an die Abtriebswelle (3) eine Fahrzeugbremse (9) angeschlossen ist, um eine Drehbewegung des Reifenrades (2) zu bremsen.

8. Vorrichtung nach einem der vorhergehenden Ansprüche, wobei die Antriebstonne (1) Befestigungsmittel aufweist, wobei mithilfe der Befestigungsmittel verschiedene primäre Massenelemente (16) an der Antriebstonne (1) befestigt werden können.

9. Vorrichtung nach einem der vorhergehenden Ansprüche, wobei eine zweite rotierbare Antriebstonne (1) vorgesehen ist, wobei die zweite Antriebstonne (1) über einen Antrieb (5) angetrieben werden kann, wobei die zweite Antriebstonne (1) eine zweite Reibschlussplatte (7) aufweist, wobei die zweite Reibschlussplatte (7) an einem drehbar gelagerten zweiten Reifenrad (2) anliegt, wobei das zweite Reifenrad (2) mit einer zweiten Abtriebswelle (3) verbunden ist, wobei die zweite Abtriebswelle (3) an die Antriebseinheit (4, 11) angeschlossen ist, wobei die zweite Antriebstonne (1) mit der zweiten Reibschlussplatte (7) ausgebildet ist, Drehmoment mit dem zweiten Reifenrad (2) auszutauschen.

10. Vorrichtung nach Anspruch 9, wobei die erste und die zweite Abtriebswelle (3) über ein Ausgleichsdifferential (13) der Antriebseinheit (4, 11) verbunden sind.

11. Vorrichtung nach einem der vorhergehenden Ansprüche, wobei das Reifenrad (2) über ein weiteres Lager (39) an der Antriebstonne (1) gelagert ist.

12. Verfahren zur Erprobung wenigstens eines Teiles eines Antriebstranges eines Fahrzeuges, wobei eine rotierbare Antriebstonne (1) vorgesehen ist, wobei eine Reibschlussplatte (7) der Antriebstonne (1) an einem drehbar gelagerten Reifenrad (2) anliegt, wobei die Reibschlussplatte (7) zwischen der Antriebstonne(1) und dem Reifenrad(2) angeordnet ist, wobei das Reifenrad (2) über eine Abtriebswelle (3) mit einer Antriebseinheit (4, 11) verbunden ist, wobei durch Drehen der Antriebstonne das Reifenrad gedreht wird oder wobei durch Drehen des Reifenrades die Antriebstonne gedreht wird, wobei sich mit dem Reifenrad die Abtriebswelle und ein Drehzahl und/oder ein Drehmoment führendes Bauteil der Antriebseinheit mitbewegt, wobei während des Drehens des Reifenrades eine Funktion der Antriebseinheit (4, 11) verändert wird, **dadurch gekennzeichnet, dass** die Reibschlussplatte (7) zwischen der Antriebstonne (1) und dem Reifenrad (2) angeordnet ist, und dass die Drehachse der Antriebstonne (2) auf gleicher Achse angeordnet ist wie die Drehachse des Reifenrades (2).

13. Verfahren nach Anspruch 12, wobei als Funktion der Antriebseinheit eine Parksperre (20), insbesondere eine Parksperre (20) des Getriebes gelöst oder aktiviert wird.

14. Verfahren nach einem der Ansprüche 12 oder 13, wobei mithilfe der drehbaren Antriebstonne (1) mit der Reibschlussplatte (7) eine Maximalbelastung auf das Reifenrad (2) und die damit verbundenen Teile des Antriebstranges (3,4,11) für einen realen Fahrzeugstraßenbetrieb, insbesondere für einen maximalen Belastungsfall wie z.B. bei einem Rutschen eines blockierenden Reifens auf einem Straßenbelag simuliert wird.

15. Steuereinheit, die ausgebildet ist, Befehle zu umfassen, die bewirken, dass die Vorrichtung nach einem der Ansprüche 1 bis 11 die Verfahrensschritte nach einem der Ansprüche 12 bis 14 ausführt.

## Claims

1. Device for testing at least one part of a drivetrain of a vehicle, having at least one rotatable drive drum (1) which can be driven by means of a drive (5), wherein the drive drum (1) has a frictional contact plate (7), wherein the frictional contact plate (7) lies against a rotatably mounted tyred wheel (2), wherein the tyred wheel (2) is connected to an output shaft (3), wherein the output shaft (3) is connected to a rotationally fixedly mounted drive unit (4, 11), wherein the drive drum (1) with the frictional contact plate (7) is designed to exchange torque with the tyred wheel (2), **characterized in that** the frictional contact plate (7) is arranged between the drive drum (1) and the tyred wheel (2), and **in that** the axis of rotation of the drive drum (2) is arranged on the same axis as the axis of rotation of the tyred wheel (2).

2. Device according to Claim 1, wherein the drive unit has a transmission (4) and/or a drive motor (11).

3. Device according to Claim 1 or 2, **characterized in that** the frictional contact plate (7) is of planar design in a contact region (24) that is provided for bearing against the tyred wheel (2).

4. Device according to any one of Claims 1 to 3, **characterized in that** the frictional contact plate (7) is mounted on the drive drum (1) so as to be adjustable in position relative to the tyred wheel (2).

5. Device according to Claim 4, wherein the frictional contact plate (7) is designed to be adjustable in terms of an angle of inclination with respect to an arrangement parallel to an axis of rotation of the tyred wheel, in order to replicate wheel camber, and/or wherein the frictional contact plate (7) is designed to be adjustable in terms of a spacing to an axis of rotation of the tyred wheel (2), in order to vary a contact pressure force on the tyred wheel (2).

6. Device according to any one of the preceding claims, wherein the frictional contact plate (7) has an exchangeable friction lining (37), and wherein, in particular, friction linings (37) with different surface roughnesses are provided in order to be able to set different friction coefficients between the tyred wheel (2) and the frictional contact plate (7).

7. Device according to any one of the preceding claims, wherein a vehicle brake (9) is connected to the output shaft (3) in order to brake a rotational movement of the tyred wheel (2).

8. Device according to any one of the preceding claims, wherein the drive drum (1) has fastening means, wherein different primary mass elements (16) can be fastened to the drive drum (1) using the fastening means.

9. Device according to any one of the preceding claims, wherein a second rotatable drive drum (1) is provided, wherein the second drive drum (1) can be driven by means of a drive (5), wherein the second drive drum (1) has a second frictional contact plate (7), wherein the second frictional contact plate (7) lies against a rotatably mounted second tyred wheel (2), wherein the second tyred wheel (2) is connected to a second output shaft (3), wherein the second output shaft (3) is connected to the drive unit (4, 11), wherein the second drive drum (1) with the second frictional contact plate (7) is designed to exchange torque with the second tyred wheel (2).

10. Device according to Claim 9, wherein the first and the second output shaft (3) are connected to the drive unit (4, 11) via a differential gear (13).

11. Device according to any one of the preceding claims, wherein the tyred wheel (2) is mounted on the drive drum (1) by means of a further bearing (39).

12. Method for testing at least one part of a drivetrain of a vehicle, wherein a rotatable drive drum (1) is provided, wherein a frictional contact plate (7) of the drive drum (1) lies against a rotatably mounted tyred wheel (2), wherein the frictional contact plate (7) is arranged between the drive drum (1) and the tyred wheel (2), wherein the tyred wheel (2) is connected via an output shaft (3) to a drive unit (4, 11), wherein the tyred wheel is rotated by rotation of the drive drum or wherein the drive drum is rotated by rotation of the tyred wheel, wherein the output shaft and a component of the drive unit which carries a rotational speed and/or a torque move conjointly with the tyred wheel, wherein, during the rotation of the tyred wheel, a function of the drive unit (4, 11) is changed, **characterized in that** the frictional contact plate (7) is arranged between the drive drum (1) and the tyred wheel (2), and **in that** the axis of rotation of the drive drum (2) is arranged on the same axis as the axis of rotation of the tyred wheel (2).

13. Method according to Claim 12, wherein, as a function of the drive unit, a parking lock, in particular a parking lock (20) of the transmission, is released or activated.

14. Method according to either one of Claims 12 and 13, wherein the rotatable drive drum (1) with the frictional contact plate (7) is used to simulate a maximum load on the tyred wheel (2), and on those parts of the drivetrain (3, 4, 11) which are connected thereto, for real on-road vehicle operation, in particular for a maximum load situation such as slipping of a blocking tyre on a road surface.

15. Control unit designed to comprise commands that cause the device according to any one of Claims 1 to 11 to carry out the method steps according to any one of Claims 12 to 14.

## Revendications

1. Dispositif permettant de tester au moins une partie d'une chaîne cinématique d'un véhicule, comprenant au moins une rotule d'entraînement rotative (1) qui peut être entraînée par un mécanisme d'entraînement (5), la rotule d'entraînement (1) présentant une plaque de liaison par friction (7), la plaque de liaison par friction (7) étant adjacente à une roue à pneu (2) montée en rotation, la roue à pneu (2) étant reliée à un arbre de sortie (3), l'arbre de sortie (3) étant raccordé à une unité d'entraînement (4, 11) montée de manière verrouillée en rotation, la rotule d'entraînement (1) dotée de la plaque de liaison par friction (7) étant réalisée pour échanger un couple avec la roue à pneu (2),
**caractérisé en ce que** la plaque de liaison par friction (7) est disposée entre la rotule d'entraînement (1) et la roue à pneu (2), et **en ce que** l'axe de rotation de la rotule d'entraînement (2) est disposé sur le même axe que l'axe de rotation de la roue à pneu (2).

2. Dispositif selon la revendication 1, dans lequel l'unité d'entraînement présente une boîte de vitesses (4) et/ou un moteur d'entraînement (11).

3. Dispositif selon la revendication 1 ou 2, **caractérisé en ce que** la plaque de liaison par friction (7) est réalisée de manière plane dans une zone de contact (24) qui est prévue pour être adjacente à la roue à pneu (2).

4. Dispositif selon l'une quelconque des revendications 1 à 3, **caractérisé en ce que** la plaque de liaison par friction (7) est montée sur la rotule d'entraînement (1) de manière réglable en position par rapport à la roue à pneu (2).

5. Dispositif selon la revendication 4, dans lequel la plaque de liaison par friction (7) est réalisée de manière inclinée selon un angle par rapport à un agencement parallèle à un axe de rotation de la roue à pneu pour simuler un déport de roue, et/ou dans lequel la plaque de liaison par friction (7) est réalisée de manière réglable en distance par rapport à un axe de rotation de la roue à pneu (2) afin de modifier une force de pression sur la roue à pneu (2).

6. Dispositif selon l'une quelconque des revendications précédentes, dans lequel la plaque de liaison par friction (7) présente une garniture de friction remplaçable (37), et dans lequel en particulier, des garnitures de friction (37) dotées de différentes rugosités de surface sont prévues afin de pouvoir régler différentes valeurs de friction entre la roue à pneu (2) et la plaque de liaison par friction (7) .

7. Dispositif selon l'une quelconque des revendications précédentes, dans lequel un frein de véhicule (9) est raccordé à l'arbre de sortie (3) afin de freiner un mouvement de rotation de la roue à pneu (2) .

8. Dispositif selon l'une quelconque des revendications précédentes, dans lequel la rotule d'entraînement (1) présente des moyens de fixation, les moyens de fixation permettant de fixer différents éléments de masse primaires (16) à la rotule d'entraînement (1).

9. Dispositif selon l'une quelconque des revendications précédentes, dans lequel une deuxième rotule d'entraînement rotative (1) est prévue, la deuxième rotule d'entraînement (1) pouvant être entraînée par un mécanisme d'entraînement (5), la deuxième rotule d'entraînement (1) présentant une deuxième plaque de liaison par friction (7), la deuxième plaque de liaison par friction (7) étant adjacente à une deuxième roue à pneu (2) montée en rotation, la deuxième roue à pneu (2) étant reliée à un deuxième arbre de sortie (3), le deuxième arbre de sortie (3) étant raccordé à l'unité d'entraînement (4, 11), la deuxième rotule d'entraînement (1) dotée de la deuxième plaque de liaison par friction (7) étant réalisée pour échanger un couple avec la deuxième roue à pneu (2).

10. Dispositif selon la revendication 9, dans lequel le premier et le deuxième arbre de sortie (3) sont reliés par un différentiel de compensation (13) de l'unité d'entraînement (4, 11).

11. Dispositif selon l'une quelconque des revendications précédentes, dans lequel la roue à pneu (2) est montée sur la rotule d'entraînement (1) par l'intermédiaire d'un autre palier (39).

12. Procédé permettant de tester au moins une partie d'une chaîne cinématique d'un véhicule, une rotule d'entraînement rotative (1) étant prévue, une plaque de liaison par friction (7) de la rotule d'entraînement (1) étant adjacente à une roue à pneu (2) montée en rotation, la plaque de liaison par friction (7) étant disposée entre la rotule d'entraînement (1) et la roue à pneu (2), la roue à pneu (2) étant reliée à une unité d'entraînement (4, 11) par un arbre de sortie (3), une rotation de la rotule d'entraînement faisant tourner la roue à pneu ou une rotation de la roue à pneu faisant tourner la rotule d'entraînement, le mouvement de la roue à pneu étant accompagné de l'arbre de sortie et d'un composant de l'unité d'entraînement provoquant une vitesse de rotation et/ou un couple, dans lequel, pendant la rotation de la roue à pneu, une fonction de l'unité d'entraînement (4, 11) est modifiée,
**caractérisé en ce que** la plaque de liaison par friction (7) est disposée entre la rotule d'entraînement (1) et la roue à pneu (2), et **en ce que** l'axe de rotation de la rotule d'entraînement (2) est disposé sur le même axe que l'axe de rotation de la roue à pneu (2).

13. Procédé selon la revendication 12, dans lequel un frein de stationnement (20), en particulier un frein de stationnement (20) de la boîte de vitesses, est desserré ou activé comme une fonction de l'unité d'entraînement.

14. Procédé selon l'une quelconque des revendications 12 ou 13, dans lequel, à l'aide de la rotule d'entraînement (1) rotative, la plaque de liaison par friction (7) simule une charge maximale sur la roue à pneu (2) et les composants reliés à celle-ci de la chaîne cinématique (3, 4, 11) pour un fonctionnement sur route réel du véhicule, en particulier pour un cas de charge maximale, comme par exemple lorsqu'un pneu bloqué dérape sur un revêtement de route.

15. Unité de commande qui est réalisée pour détecter des ordres qui ont pour effet que le dispositif selon l'une quelconque des revendications 1 à 11 exécute les étapes de procédé selon l'une quelconque des revendications 12 à 14.
